Europäisches Patentamt

European Patent Office

Office européen des brevets

(11) Numéro de publication: **0 467 800 B1**

(19)

(12) **FASCICULE DE BREVET EUROPEEN**

(45) Date de publication de fascicule du brevet: **01.03.95** (51) Int. Cl.⁶: **C09D 183/04**, C08K 3/22, C08K 13/02

(21) Numéro de dépôt: **91420238.7**

(22) Date de dépôt: **09.07.91**

(54) **Compositions organopolysiloxanes vulcanisables à chaud, utilisables notamment pour le revêtement de câbles électriques.**

(30) Priorité: **19.07.90 FR 9009472**

(43) Date de publication de la demande:
**22.01.92 Bulletin 92/04**

(45) Mention de la délivrance du brevet:
**01.03.95 Bulletin 95/09**

(84) Etats contractants désignés:
**AT BE CH DE DK ES FR GB GR IT LI LU NL SE**

(56) Documents cités:
**FR-A- 2 451 387**
**US-A- 3 711 520**
**US-A- 3 834 938**

**OUESTEL TELESYSTEMS (WPI), Derwent accession no. 79-85178B [47], Derwent Publications Ltd, Londres, GB; & JP-A-54 132 799**

**OUESTEL TELESYSTEMS (WPIL), Derwent accession no. 81-02894D [03], Derwent Publications Ltd, Londres, GB; & JP-A-55 144 608**

**PATENT ABSTRACTS OF JAPAN, vol. 12, no. 270 (C-515)[3117], 27 juillet 1988; & JP-A-63 51 495**

(73) Titulaire: **RHONE-POULENC CHIMIE**
**25, Ouai Paul Doumer**
**F-92408 Courbevoie Cédex (FR)**

(72) Inventeur: **Ariagno, Daniel**
**15, Résidence de la Voie Romaine**
**F-69290 Craponne (FR)**
Inventeur: **Barruel, Pierre**
**24, rue de Montribloud**
**F-69160 Tassin-la-Demi-Lune (FR)**
Inventeur: **Viale, Alain**
**8, rue Calliolat**
**F-38200 Luzinay (FR)**

(74) Mandataire: **Trolliet, Maurice et al**
**RHONE-POULENC CHIMIE,**
**Direction de la Propriété Industrielle,**
**Centre de Recherches des Carrières,**
**B.P. 62**
**F-69192 Saint-Fons Cédex (FR)**

EP 0 467 800 B1

## Description

La présente invention concerne des compositions vulcanisables à chaud en élastomères silicones, c'est-à-dire vulcanisables à des températures généralement comprises entre 100 et 250°C.

Les compositions selon la présente invention sont plus particulièrement intéressantes pour la protection au feu de circuits électriques et notamment pour la protection au feu de fils ou câbles électriques, ou de fibres de verre, c'est-à-dire pour que ces fils ou câbles électriques ou fibres de verre puissent continuer à assurer leur fonction en cas d'incendie.

En effet, un but de la présente invention est l'obtention de compositions vulcanisables à chaud en élastomères silicones ayant une bonne souplesse (un bon allongement à la rupture par exemple supérieur ou égal à 180 %), une bonne résistance à la propagation de flamme et qui, à des températures supérieures à 500°C, se transforment en une substance cendreuse isolante et cohérente ayant une excellent stabilité dimensionnelle, une excellente résistance mécanique, un excellent pouvoir d'isolation électrique et d'excellentes propriétés de résistance aux chocs thermiques et mécaniques.

Il est connu d'après FR-A-2 451 387 de former des substances céramiques par cuisson à haute température de revêtements élastomères silicones obtenus à partir de compositions contenant (A) une résine silicone formée d'unités siloxanes mono et tétra fonctionnelles, éventuellement (B) un polyorganosiloxane exempt d'unités siloxanes tétrafonctionnelles, une charge (C) formatrice de céramique (mica, oxyde de zinc...) et (D) un peroxyde organique, la quantité de (B) devant être au maximum de 600 parties pour 100 parties de (A).

Il a été trouvé, et c'est ce qui fait l'objet de la présente invention, des compositions vulcanisables à chaud en élastomères silicones, utilisables notamment dans le domaine des fils et câbles électriques, caractérisées en ce qu'elles comprennent au moins :

a) un polymère polydiorganosiloxane linéaire,

b) une charge de renforcement,

c) un peroxyde organique,

d) du mica,

e) de l'oxyde de zinc,

et qu'elles renferment, pour 100 parties en poids de polymère polydiorganosiloxane a), de 0,5 à 39,8 parties de mica d) et de 0,2 à 10 parties d'oxyde de zinc e), la somme de ces deux composés d) + e) n'excédant pas 40 parties en poids ;

à l'exception de pareilles compositions vulcanisables à chaud renfermant en outre une résine polysiloxane MQ essentiellement formée d'unités $R''SiO_{1,5}$ et $SiO_2$ où $R''$ est un radical hydrocarboné monovalent substitué ou non contenant 1 à 10 atomes de carbone, et dans lesquelles la quantité du polymère polydiorganosiloxane a) représente au plus 600 parties en poids pour 100 parties de résine polysiloxane.

Un autre objet de la présente invention concerne tout substrat (par exemple circuit électrique, fils ou câbles électriques) sur lequel la composition a été vulcanisée en élastomère silicone, ainsi que le substrat recouvert de l'élastomère après que ce dernier ait été soumis à des températures supérieures à 500°C.

Ainsi la Demanderesse a trouvé que les compositions selon la présente invention, du fait de la synergie entre le mica et l'oxyde de zinc, permettaient l'obtention d'élastomères ayant de bonnes propriétés mécaniques, notamment un bon allongement à la rupture (d'au moins 180 %) et conduisant pour des températures supérieures à 500°C à une substance isolante et cohérente ayant l'ensemble des propriétés déjà énoncées ci-avant lors de la discussion du but de l'invention.

En effet, si dans les compositions on utilise uniquement du mica, les cendres obtenues avec l'élastomère soumis à des températures supérieures à 500°C peuvent s'effriter sous des chocs thermiques ou mécaniques, tandis que si on n'utilise que de l'oxyde de zinc les cendres obtenues sont fragiles (apparition de craquelures sous l'influence de chocs thermiques et mécaniques).

Ainsi les compositions selon la présente invention comprennent au moins a) un polymère polydiorganosiloxane a) contenant de 0 à 4 %, de préférence de 0,01 à 3 %, en poids, de groupement vinylé. Lorsque ces polymères polydiorganosiloxanes a) ont des viscosités à 25°C comprises entre 50.000 et 1.000.000 mPa.s, elles sont appelées huiles, mais leur viscosité peut être supérieure à 1.000.000 mPa.s et elles sont appelées alors des gommes. Dans les compositions selon la présente invention, les polymères polydiorganosiloxanes peuvent être des huiles ou des gommes ou des mélanges. Ces polymères polydiorganosiloxanes sont des polymères linéaires, dont la chaîne diorganopolysiloxanique est constituée essentiellement de motifs de formule $R_2SiO$. Cette chaîne est bloquée à chaque extrémité par un motif de formule $R_3Si_{0,5}$ et/ou un radical de formule OR'. Dans ces formules :

- les symboles R, identiques ou différents, représentent des radicaux hydrocarbonés monovalents tels que des radicaux alkyles, par exemple, méthyle, éthyle, propyle, octyle, octadécyle, des radicaux aryle, par exemple phényle, tolyle, xylyle, des radicaux aralkyle tels que benzyle, phényléthyle, des radicaux cycloalkyle et cycloalkényle tels que des radicaux cyclohexyle, cycloheptyle, cyclohexényle, des radicaux alkényle, par exemple des radicaux vinyle, allyle, des radicaux alkaryle, des radicaux cyanoalkyle tels qu'un radical cyanoéthyle, des radicaux halogénoalkyle, halogénoalkényle et halogénoaryle, tels que des radicaux chlorométhyle trifluoro-3,3,3 propyle, chlorophényle, dibromophényle, trifluorométhylphényle,

-   le symbole R' représente un atome d'hydrogène, un radical alkyle ayant de 1 à 4 atomes de carbone, le radical bétaméthoxy-éthyle.

De préférence, au moins 60 % des groupes R représentent des radicaux méthyle. La présence, le long de la chaîne diorganopolysiloxanique, de faibles quantités de motifs autres que $R_2SiO$, par exemple de motifs de formule $RSiO_{1,5}$ et/ou $SiO_2$ n'est cependant pas exclue dans la proportion d'au plus 2 % par rapport au nombre de motifs $R_2SiO$.

A titre d'exemples concrets de motifs de formules $R_2SiO$ et $R_3SiO_{0,5}$ et de radicaux de formule OR', peuvent être cités ceux de formules :

$(CH_3)_2SiO$, $CH_3(CH_2 = CH)SiO$, $CH_3(C_6H_5)SiO$, $(C_6H_5)_2SiO$,
$CH_3(C_2H_5)SiO$, $(CH_3CH_2CH_2)CH_3SiO$, $CH_3(n.C_3H_7)SiO$,
$(CH_3)_3SiO_{0,5}$, $(CH_3)_2CH_2 = CHSiO_{0,5}$, $CH_3(C_6H_5)_2SiO_{0,5}$,
$(CH_3)(C_6H_5)(CH_2 = CH)SiO_{0,5}$
OH, $-OCH_3$, $-OC_2H_5$, $-O-n.C_3H_7$, $-O-iso.C_3H_7$, $-O-n.C_4H_9$,
- $OCH_2CH_2OCH_3$

Ces huiles et gommes sont commercialisées par les fabricants de silicone ou peuvent être fabriquées en opérant selon des techniques déjà connues.

La charge de renforcement b) est le plus généralement une charge de silice de renforcement. De telles charges sont caractérisées par une fine taille de particules et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des caoutchoucs de silicone. Ces silices peuvent être préparées par voie pyrogénique (silices dites de combustion ou de fumée) ou par des procédés humides (silices précipitées) et peuvent être traitées ou non traitées. La nature chimique et le procédé de préparation ne sont pas importants aux fins de la présente invention, pourvu que la silice soit capable d'exercer une action de renforcement dans l'élastomère fini. De préférence, la charge de renforcement utilisée est une silice de combustion. La proportion de composant (b) employée dans les compositions de la présente invention n'est pas étroitement critique et peut s'échelonner d'environ 5 à environ 100 parties, de préférence 10 à 65 parties, en poids pour 100 parties en poids de polydiorganosiloxane (a).

Le peroxyde organique constituant le composant (c) peut être n'importe lequel de ceux qui agissent comme agent vulcanisants envers les compositions formatrices d'élastomères de silicones. Il peut ainsi s'agir de l'un quelconque des peroxydes ou peresters qu'il est connu d'employer avec les élastomères de silicone, par exemple le peroxyde de ditertiobutyle, le peroxyde de benzoyle, le peracétate de tertiobutyle, le peroxyde de dicumyle et le 2,5-diperbenzoate de 2,5-diméthylhexane. Le choix du peroxyde dépendra en pratique du procédé employé pour durcir l'élastomère. Pour la plupart des applications, en particulier lorsque l'isolant est appliqué par extrusion comme c'est le cas dans la fabrication de câbles ou de fils, on utilisera un peroxyde qui est actif en l'absence de pression exercée, par exemple le peroxyde de monochlorobenzoyle ou le peroxyde de 2-4 dichlorobenzoyle. Le peroxyde organique est utilisé en des proportions classiques pour la vulcanisation de caoutchoucs de silicone qui s'échelonnent d'environ 0,1 à environ 7,5 parties en poids pour 100 parties en poids de polydiorganosiloxanes.

La grosseur de particules du mica qui constitue le composant (d) des compositions de la présente invention n'est pas étroitement critique, pourvu qu'elle soit suffisamment petite pour permettre une dispersion uniforme dans les composants de la composition. Le mica est approprié sous forme de mica pulvérisé ou de farine de mica.

Les compositions selon la présente invention comprennent de préférence de 1,5 à 15 parties de mica, pour 100 parties en poids de polydiorganosiloxane a).

L'oxyde de zinc qui constitue le composant e) des compositions selon la présente invention est une poudre blanche ou légèrement jaunâtre. Les compositions selon la présente invention comprennent, en poids, de préférence 0,5 à 5 parties d'oxyde de zinc pour 100 parties du polydiorganosiloxane a). Pour 100 parties du polymère polydiorganosiloxane, la somme du mica et de l'oxyde de zinc n'excède pas 40 parties.

En plus des composants spécifiés ci-avant, les compositions selon la présente invention peuvent contenir d'autres additifs tels que par exemple du platine ou des composés ou complexes du platine, de l'oxyde de titane, de l'alumine, de l'oxyde ou de l'hydroxyde de cérium, de l'oxyde de fer, du CaO, du MgO.

Les compositions selon la présente invention peuvent comprendre de plus des produits dits "antistructures" tels que par exemple des huiles de viscosité inférieure à 1000 mPa.s à 25°C et bloqués à chaque extrémité de leur chaîne par des groupements hydroxyles. Ces produits antistructures sont utilisés en poids, à raison de 0 à 12 parties pour 100 parties de gomme a).

Les compositions selon la présente invention peuvent contenir des résines polysiloxanes, dites MQ, comprenant essentiellement des unités $R^2_3SiO_{0,5}$ et $SiO_2$ dans lesquels $R^2$ représente des groupements hydrocarbonés monovalents éventuellement halogénés ayant moins de 7 atomes de carbone, le rapport $R^2_3SiO_{0,5}$ sur $SiO_2$ étant compris entre 0,5/1 et 1,2/1.

En outre les compositions selon la présente invention peuvent contenir des résines polysiloxanes, dites M'Q, comprenant essentiellement des unités $HR^2_2SiO_{0,5}$ et $SiO_2$ dans lesquelles $R^2$ a la signification donnée ci-dessus, le rapport $HR^2_2SiO_{0,5}$ sur $SiO_2$ étant compris entre 0,5/1 et 10/1. La préparation de telles résines M'Q est décrite par exemple dans le brevet US 2 857 356.

Les quantités de résine MQ ou M'Q, facultative, doivent satisfaire les conditions de l'exception présentée ci-avant lors de la description de la présente invention.

Les exemples suivants 1 à 5, montrent que les compositions 1 à 3, qui ne comportent pas le mélange ZnO + mica ne permettent pas d'obtenir des élastomères ayant les propriétés souhaitées tandis que les exemples 4 à 5, correspondant à des compositions selon la présente invention, conduisent à des élastomères ayant une bonne tenue à la flamme et une bonne cohésion de cendres.

EXEMPLE 1 :   (sans ZnO et sans mica)

Dans un pétrin malaxeur à bras de marque MEILI, on mélange pendant 2 heures 45 minutes à température ambiante :

- 100 parties, en poids, d'une gomme polydiméthylsiloxane de viscosité, à 25°C, 20 x $10^6$ mPa.S, contenant 720 parties par million de groupement méthyl, vinylsiloxane dans sa chaîne,
- 4 parties d'une huile polydiméthylsiloxane à groupements terminaux hydroxyles, de viscosité 50 mPa.s,
- 1 partie de $TiO_2$ de combustion,
- 35 parties de silice de combustion de surface spécifique de 300 $m^2/g$ (commercialisée par le Société DEGUSSA sous la référence AEROSIL 300), traitée par de l'hexaméthyldisilazane.
- 14 parties de silice de combustion de 150 $m^2/g$ de surface spécifique (référence AEROSIL 150 de DEGUSSA),
- 0,3 partie de $Fe_3O_4$
- 0,0008 partie d'acide chloroplatinique.

Le mélange obtenu ci-avant est alors travaillé sur un malaxeur à 2 cylindres et on lui ajoute :

- 0,7 partie de peroxyde de 2,4 dichlorobenzoyle.

La masse homogène obtenue sur le malaxeur est alors vulcanisée pendant 8 minutes à 115°C dans un moule approprié permettant l'obtention de pastilles de diamètre 8 mm (c'est-à-dire ayant une surface de 0,5 $cm^2$) et d'épaisseur (hauteur) 2 mm.

Ces pastilles sont alors chauffées dans un four pendant 1 heure 30 minutes à 850°C.

Le tableau n° 1, ci-après, indique l'aspect des pastilles après refroidissement, puis quelle pression il faut appliquer sur la surface de ces pastilles pour qu'elles éclatent. Ces dernières mesures sont effectuées avec un palpeur permettant de mesurer la force appliquée sur la surface des pastilles.

Le tableau n° 2, ci-après, indique le comportement des cendres obtenues avec des éprouvettes vulcanisées 8 minutes à 115°C qu'on a soumis à l'action directe de la flamme pendant 12 secondes à 843°C selon le test JAR 25853 (b), JAR signifiant JOINT AIRWORTHINESS REQUIREMENTS.

EXEMPLE 2 :   Exemple identique à exemple 1, mais composition comprenant 5 parties, en poids, de mica.

Résultats dans tableaux 1 et 2

EXEMPLE 3 :   Exemple identique à exemple 1, mais composition comprenant 5 parties de ZnO

EXEMPLE 4 :   Exemple identique à exemple 1, mais composition comprenant 2,5 parties de mica + 2,5 parties de ZnO

EXEMPLE 5 :   Exemple identique à exemple 1, mais composition comprenant 5 parties de mica +

4

2,5 parties de ZnO

TABLEAU N° 1

Tenue à la pression des pastilles après traitement 1 h 30 à 850°C dans un four

| | Craquelures après refroidissement des éprouvettes | Eclatement des pastilles par application d'une pression de 2 Ncm$^{-2}$ |
|---|---|---|
| Exemple 1 | Craquelures après refroidissement des éprouvettes | Eclatement des pastilles par application d'une pression de 2 Ncm$^{-2}$ |
| Exemple 2 | " | Eclatement des pastilles par application d'une pression de 3 Ncm$^{-2}$ |
| Exemple 3 | Pastilles cohérentes | Eclatement sous des pression supérieures à 5 N cm$^{-2}$ |
| Exemple 4 | " | " |
| Exemple 5 | " | " |

TABLEAU N° 2

| Eprouvettes soumises à l'action de la flamme 12 secondes à 843°C norme JAR 25 853 (b) | |
|---|---|
| Exemple 1 | Cendres sans cohésion |
| Exemple 2 | Cendres friables |
| Exemple 3 | Cendres dures et fragiles avec formation de craquelures importantes et profondes lors du refroidissement |
| Exemple 4 | Cendres cohérentes supportant une pression de 5 N cm$^{-2}$ |
| Exemple 5 | " |

**Revendications**

1. Compositions vulcanisables à chaud en élastomères silicones, utilisables notamment dans le domaine des fils et câbles électriques, caractérisées en ce qu'elles comprennent au moins :
   a) un polymère polydiorganosiloxane linéaire,
   b) une charge de renforcement,
   c) un peroxyde organique,
   d) du mica,

6

e) de l'oxyde de zinc,

et qu'elles renferment, pour 100 parties en poids de polymère polydiorganosiloxane a), de 0,5 à 39,8 parties de mica d) et de 0,2 à 10 parties d'oxyde de zinc e), la somme de ces deux composés d) + e) n'excédant pas 40 parties en poids ;

à l'exception de pareilles compositions vulcanisables à chaud renfermant en outre une résine polysiloxane MQ essentiellement formée d'unités R''SiO$_{1,5}$ et SiO$_2$ où R'' est un radical hydrocarboné monovalent substitué ou non contenant 1 à 10 atomes de carbone, et dans lesquelles la quantité du polymère polydiorganosiloxane a) représente au plus 600 parties en poids pour 100 parties de résine polysiloxane.

2. Compositions selon la revendication 1, caractérisées en ce que pour 100 parties de polymère polydiorganosiloxane a) elles contiennent :
   - de 1,5 à 15 parties de mica d),
   - de 0,5 à 5 parties d'oxyde de zinc e).

3. Compositions selon l'une quelconque des revendications précédentes, caractérisées en ce que la charge b) est de la silice de combustion.

4. Compositions selon l'une quelconque des revendications précédentes, caractérisées en ce que le polymère polydiorganosiloxane a) est une gomme dont la viscosité est supérieure à 1.000.000 en mPa.s à 25°C.

5. Compositions selon l'une quelconque des revendications précédentes, caractérisées en ce qu'elles contiennent, en poids, au moins :
   a) 100 parties d'une gomme polydiorganosiloxane, dont la viscosité à 25°C est supérieure à 1.000.000 en mPa.s,
   b) 5 à 100 parties de silice dont la surface spécifique BET est supérieure à 50 m$^2$/g,
   c) 0,2 à 7,5 parties en poids de peroxyde organique,
   d) de 0,5 à 39,8 parties de mica,
   d) de 0,2 à 10 parties d'oxyde de zinc.

6. Compositions selon l'une quelconque des revendications 1 à 3, caractérisées en ce que le polymère polydiorganosiloxane a) est une huile dont la viscosité est comprise entre 50.000 et 1.000.000 mPa.s à 25°C.

7. Substrat solide revêtu d'une composition selon l'une quelconque des revendications précédentes;

8. Substrat solide revêtu d'une composition selon l'une quelconque des revendications 1 à 6 et chauffé au-dessus de 500°C.

9. Substrat solide selon l'une quelconque des revendication 7 ou 8 sous forme de fil ou câble électrique.

**Claims**

1. Compositions capable of being vulcanized when heated to silicone elastomers usable especially in the field of electrical wires and cables, characterized in that they include at least:
   a) a linear polydiorganosiloxane polymer,
   b) a reinforcing filler,
   c) an organic peroxide,
   d) mica,
   e) zinc oxide,
   and in that they contain, per 100 parts by weight of polydiorganosiloxane polymer a), from 0.5 to 39.8 parts of mica d) and from 0.2 to 10 parts of zinc oxide e), the sum of these two compounds d) + e) not exceeding 40 parts by weight;
   with the exception of similar compositions capable of being vulcanized when heated additionally containing an MQ polysiloxane resin made up essentially of R''SiO$_{1,5}$ and SiO$_2$ units where R'' is an unsubstituted or substituted monovalent hydrocarbon radical containing 1 to 10 carbon atoms, and in which the quantity of the polydiorganosiloxane polymer a) represents not more than 600 parts by weight per 100 parts of polysiloxane resin.

2. Compositions according to Claim 1, characterized in that they contain, per 100 parts of polydiorganosiloxane polymer a):
   - from 1.5 to 15 parts of mica d),
   - from 0.5 to 5 parts of zinc oxide e).

3. Compositions according to either of the preceding claims, characterized in that the filler b) is pyrogenic silica.

4. Compositions according to any one of the preceding claims, characterized in that the polydiorganosiloxane polymer a) is a resin whose viscosity is higher than 1,000,000 in mPa s at 25°C.

5. Compositions according to any one of the preceding claims, characterized in that they contain, by weight, at least:
   a) 100 parts of a polydiorganosiloxane resin whose viscosity at 25°C is higher than 1,000,000 in mPa s,
   b) 5 to 100 parts of silica whose BET specific surface is greater than 50 $m^2$/g,
   c) 0.2 to 7.5 parts by weight of organic peroxide,
   d) from 0.5 to 39.8 parts of mica,
   e) from 0.2 to 10 parts of zinc oxide.

6. Compositions according to any one of Claims 1 to 3, characterized in that the polydiorganosiloxane polymer a) is an oil whose viscosity is between 50,000 and 1,000,000 mPa s at 25°C.

7. Solid substrate coated with a composition according to any one of the preceding claims.

8. Solid substrate coated with a composition according to any one of Claims 1 to 6 and heated above 500°C.

9. Solid substrate according to either of Claims 7 and 8, in the form of electrical wire or cable.

**Patentansprüche**

1. In der Wärme vernetzbare Zusammensetzungen aus Silikonelastomeren, die besonders auf dem Gebiet der elektrische Drähte und Kabel verwendbar sind, dadurch gekennzeichnet, daß sie wenigstens folgendes enthalten:
   a) ein geradliniges Polydiorganosiloxanpolymer,
   b) einen Verstärkungsfüllstoff,
   c) ein organisches Peroxid,
   d) Glimmer,
   e) Zinkoxid
   und daß sie auf 100 Gewichtsteile Polydiorganosiloxanpolymer a) 0,5 bis 39,8 Teile Glimmer d) und 0,2 bis 10 Teile Zinkoxid e) enthalten, wobei die Summe dieser beiden Verbindungen d) + e) 40 Gewichtsteile nicht überschreitet;
   mit Ausnahme derartiger in der Wärme vernetzbarer Zusammensetzungen, die außerdem ein Polysiloxanharz MQ enthalten, das im wesentlichen aus R''SiO$_{1,5}$- und SiO$_2$-Einheiten gebildet wird, in dem R'' ein monovalenter Kohlenwasserstoffrest ist, der substituiert ist oder nicht und 1 bis 10 Kohlenstoffatome enthält, und in denen die Menge an Polydiorganosiloxanpolymer a) höchstens 600 Gewichtsteile auf 100 Teile Polysiloxanharz ausmacht.

2. Zusammensetzungen nach Anspruch 1, dadurch gekennzeichnet, daß sie auf 100 Teile des Polydiorganosiloxanpolymers a):
   - 1,5 bis 15 Teile Glimmer d),
   - 0,5 bis 5 Teile Zinkoxid e) enthalten.

3. Zusammensetzungen nach einem der vorhergehenden Ansprüche, dadurch gekennzeichnet, daß der Füllstoff b) pyrogene Kieselsäure ist.

4. Zusammensetzungen nach einem beliebigen der vorhergehenden Ansprüche, dadurch gekennzeichnet, daß das Polydiorganosiloxanpolymer a) ein Gummi ist, dessen Viskosität oberhalb von 1.000.000 in mPa•s bei 25 °C liegt.

5. Zusammensetzungen nach einem beliebigen der vorhergehenden Ansprüche, dadurch gekennzeichnet, daß sie, bezogen aufs Gewicht, wenigstens enthalten:
   a) 100 Teile eines Polydiorganosiloxangummis, dessen Viskosität bei 25 °C oberhalb von 1.000.000 in mPa•s liegt,
   b) 5 bis 100 Teile Kieselgel, dessen spezifische Oberfläche BET oberhalb von 50 m$^2$/g liegt,
   c) 0,2 bis 7,5 Gewichtstelle organischen Peroxids,
   d) 0,5 bis 39,8 Teile Glimmer,
   d) 0,2 bis 10 Teile Zinkoxid.

6. Zusammensetzungen nach einem beliebigen der Ansprüche 1 bis 3, dadurch gekennzeichnet, daß das Polydiorganosiloxanpolymer a) ein Öl ist, dessen Viskosität bei 25 °C zwischen 50.000 und 1.000.000 mPa•s liegt.

7. Feste Unterlage, die mit einer Zusammensetzung nach einem beliebigen der vorhergehenden Ansprüche beschichtet ist.

8. Feste Unterlage, die mit einer Zusammensetzung nach einem beliebigen der Ansprüche 1 bis 6 beschichtet ist und auf über 500 °C erhitzt wird.

9. Feste Unterlage nach einem beliebigen der Ansprüche 7 oder 8 in Form eines elektrischen Drahts oder Kabels.